# EUROPEAN PATENT APPLICATION

(11) **EP 1 462 953 A1**
(43) Date of publication of application: **29.09.2004**
(21) Application number: 04002827.6
(22) Date of filing: 09.02.2004
(51) Int. Cl.: G06F 17/30

(54) **Database search path designation method**

(30) Priority: 28.03.2003 JP 2003092619
(71) Applicant: Hitachi Software Engineering Co., Ltd., Yokohama-shi, Kanagawa 230-0045 (JP)
(72) Inventor: Tago, Shigeru, Shinagawa-ku Tokyo 140-0002 (JP)
(74) Representative: Liesegang, Roland, Dr.-Ing.

(57) **Abstract**

A search path can be easily designated between a plurality of databases for retrieving search keys and records from related databases in a chain-reactive manner. Databases that are potential search targets are displayed on a two-dimensional screen in the form of figures. Individual figures are designated using a pointing device and then key database A and terminal database D are designated out of databases A to F corresponding to the designated figures. Search keys and records are retrieved in a chain-reactive manner by following designated one or more of possible paths 302a and 302b that pass through the databases that exist between key database A and terminal database D designated on the screen.

## Description

This application is based on the Japanese patent application 2003-092619, filed on March 28^{th} 2003, all the content of which is incorporated in this application by reference.

### BACKGROUND OF THE INVENTION

### 1. Technical Field

The present invention relates to a database search system, and more particularly to a search method for carrying out the retrieval of records and search keys between a plurality of databases in a chain-reactive manner.

### 2. Background Art

There are cases where various records regarding a particular theme are stored in a plurality of different databases. In a typical example, a plurality of databases in which attributes regarding a particular gene or protein are stored as records from different viewpoints are operated by separate organizations. Users of these databases can utilize such a group of databases mainly in the following two ways:
(1) Input a search key concerning a single theme into a plurality of databases in a parallel manner, and then retrieve records.
(2) Input a search key concerning a single theme into one specific database, and refer to resultant, retrieved records. The records in many cases describe link information to related records in the form of search keys that can be entered into other databases. Thus, a user can acquire the search keys and enter them into the databases to which they can be entered, so that he or she can refer to an retrieved record.

When there are a plurality of databases, the form of the search keys that can be entered into the databases, namely record IDs or document Nos, often varies. Accordingly, in mode of use (1), the user must obtain different kinds of search keys corresponding to a desired theme in advance, thereby complicating the operation. Thus, it is often more advantageous to employ mode of use (2), wherein the input of a single search key corresponding to a desired theme enables the retrieval of records of the same theme in other databases in a chain-reactive manner. In cases where there are three or more databases, instead of two databases that correspond to each other on a one-to-one basis, a method is used whereby a search is carried out on those databases in a chain-reactive manner such that the process of retrieving a search key and entering it into another database is automatically repeated until a terminal database designated in advance by the user is reached. In accordance with this method, the keys, which are information linking to related records, are followed in a chain-reactive manner, so that a search key that cannot be directly inputted into the terminal database whose contents the user wishes to obtain eventually can be indirectly inputted thereto via other databases. Thus, the records in the terminal database can be retrieved and referred to, so that the efficiency of the search-key input operation can be significantly improved

The Japanese patent application kokai 2000-222418, laid open 11th August, 2000, which discloses a data base retrieving device, mode of (2) the device is provided with two or more data bases, a retrieving object data base input device for specifying a data base to be retrieved, a priority information input device for setting up priority at the time of retrieving each specified data based to be retrieved, and a retrieving request input device for inputting information indicating a retrieving request. The device is also provided with a data base retrieving device for applying retrieval corresponding to priority to the data base to be retrieved and extracting information having high relationship with the inputted retrieving request, a mode data base restricting device for restricting a data base to be used for retrieval and a data display device for displaying extracted information.

The above described database enables to execute retrieval considering the priority of respective databases in the case of retrieving plural databases and to display and report a list of retrieved results to a user so that the features of retrieved results can easily be understood.

The mode (2) of use, however, has the following problems. Namely, whether or not a key as information linking to related records of other related databases is contained in records of each database depends on the intention of the record producer of each database, and those intentions are largely dependent on the personal viewpoint of the producer. Although it is fundamentally preferable to enable chain-reactive processing until records are retrieved from the terminal database as related records, a suitable record often cannot be retrieved from the terminal database if any one database on the path (hereafter referred to as "intervening database") does not contain a search key. There is no solution for the above problem in the Japanese patent application.

### SUMMARY OF THE INVENTION

It is therefore the object of the invention to enable a search path between a plurality of databases to be easily designated when retrieving search keys and records from related databases.

This object of the invention can be achieved by the following manner. Specifically, the invention provides a database system with certain functions. The database system is configured such that a record retrieval is carried out using a first search key that is entered into a key database, and then a second key contained in the retrieved records that is different from the first search key is entered into a second intervening database different from the key database to carry out a record retrieval in the second intervening database. This is followed by the retrieval of search keys and records in a plurality of databases in a chain-reactive manner. Upon retrieval of records from a pre-designated terminal database, the retrieved records are supplied as search results. The functions with which the database system is provided in accordance with the invention include a function for disposing databases that are potential search targets on the screen in the form of figures, a function for designating individual figures with a pointing device, and a function for designating databases corresponding to the designated figures as the first database and terminal database. Search keys and records are retrieved in a chain-reactive manner by following possible paths that pass through databases that exist between the first database and terminal database designated on the screen.

The possible paths that pass through the databases between the key database and the terminal database designated on the screen are made recognizable by displaying a figure by which the figures corresponding to the individual databases are connected.

Retrieval of search keys and records is carried out in a chain-reactive manner by following possible paths that pass through all of the databases other than the key database and terminal database that correspond to the figures designated by the pointing device.

Retrieval of search keys and records is carried out in a chain-reactive manner by following possible paths that do not pass through any of the databases other than the key database and terminal database that correspond to the figures designated by the pointing device.

The system is provided with a function of displaying on the screen, upon designation of the key database, only those figures that correspond to the databases that can be designated as the key database, preferably with a feature distinguishing them from other figures. Alternatively, the system is provided with a function of displaying on the screen, upon designation of the terminal database, only those figures that correspond to the databases that can be designated as the terminal database, preferably with a feature distinguishing them from other figures.

The above means enable the following effects to be obtained:
(1) The user can recognize possible candidate paths in a visually easily recognizable manner upon designation of the key database and terminal database.
(2) When there are more than one possible candidate paths, they can be narrowed down to only those that go through desired databases before record retrieval, by the user designating appropriate databases as intervening databases or non-intervening databases (to be referred to as eliminated databases).
(3) The user can recognize in a visually easily understandable manner whether or not a certain database is selectable as key database or terminal database.

### BRIEF DESCRIPTION OF THE DRAWINGS

Fig. 1 shows a block diagram of an example of the database search path designation system according to an embodiment of the invention.
Fig. 2 shows an example of the structure of a table stored in the database shown in Fig. 1.
Fig. 3 shows an example of a database selection screen displayed by the database search path designation method according to an embodiment of the invention, in which correlations among various databases are indicated, with a potential key database indicated with solid line.
Fig. 4 shows the designation of a key database using a mouse pointer, following Fig. 3.
Fig. 5 shows the designation of a terminal database using a mouse pointer, following Fig. 4.
Fig. 6 shows the indication of search path candidates with solid line, following Fig. 5.
Fig. 7 shows the manner in which search paths are narrowed by designating intervening databases in Fig. 6.
Fig. 8 shows the manner in which search paths are narrowed by designating eliminated databases in Fig. 6.
Fig. 9 shows an example of the structure of a group of records obtained as search results.
Fig. 10 shows a flowchart illustrating the flow of processes performed by the database search path designation method according to an embodiment of the invention.
Fig. 11 shows a flowchart illustrating the flow of processes performed by the database search path designation method according to the embodiment of the invention, following Fig. 10.

### DETAILED DESCRIPTION OF THE PREFERRED EMBODIMENTS

In the mode of use in which a certain path is designated from a plurality of candidate paths, it is likely that whether a key is contained in the records of a certain database that is link information linking the database to another database indicates the feature of the theme as the search target depending on the attributes of the records mainly focused by that database. Thus, if the user indicates the intervening databases as well as the key database and the terminal database, the number of the records that are retrieved by the search key inputted into the key database can be narrowed according to the feature of the theme. In the following description of an embodiment, it is assumed that the user is aware of the correlation between databases and that the system has stored the correlation between identification numbers (links or IDs) that are embedded in the databases.

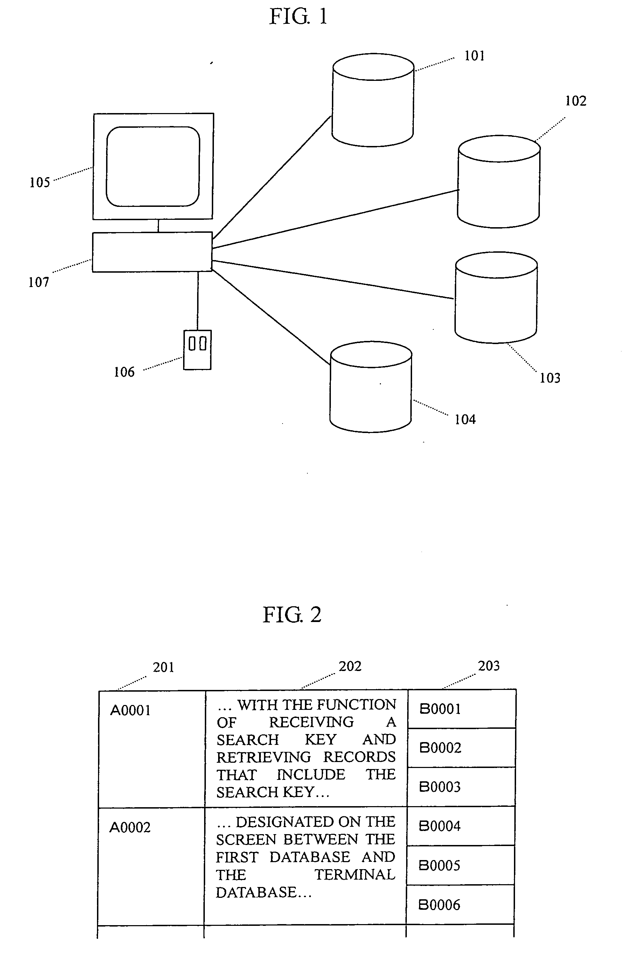

Hereafter an embodiment of the invention will be described by referring to the drawings. Fig. 1 shows an example of the system according to the present embodiment. Numerals 101 to 104 designate various databases that are searched. Numeral 105 designates a display unit for displaying search results and the records in a database. Numeral 106 designates a mouse unit for indicating a point on the screen of the display unit 105. Numeral 107 designates a transmit/receive and calculating unit for transmitting a search request to the databases 101 to 104 and receiving results therefrom. The results of the transmit and receive processes are displayed on the display unit 105 by the instruction of the transmit/receive and calculating unit 107.

Fig. 2 shows an example of the structure of a table stored in each of the databases 101 to 104. A column 201 is a field for storing search keys for the database in which the table shown in Fig. 2 is stored. A column 202 is a field for storing individual records stored in the database. A column 203 is a field for storing search keys for records in another database that are related to the records stored in the same line.

For example, in the example of Fig. 2, the record in line A001 can be searched by key A001 in database A and is also related to records that can be searched by keys B001, B002 and B003 in database B. The manner in which the search keys are described herein, namely the database name followed by numerals, is merely an example and search keys of other forms may be employed.

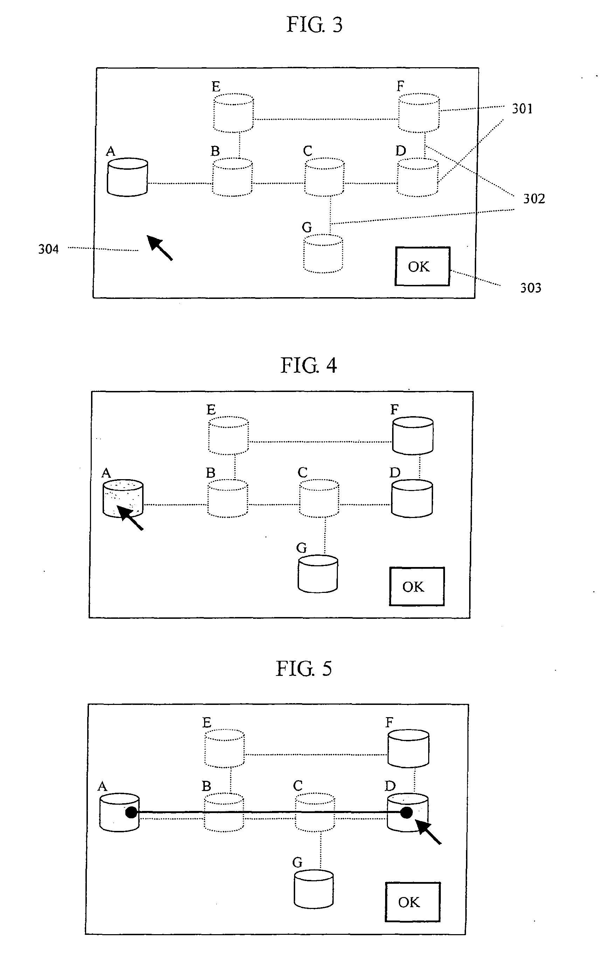

Now referring to Figs. 3 to 8, these figures express the changes of a database selection screen when the databases are searched using the system according to the present embodiment of the invention. Numeral 301 designates figures representing individual databases. Numeral 302 designates dotted lines that indicate that, with regard to records that are related between the databases, there is the possibility that search keys are stored in the column 203 (Fig. 2). For example, as databases E and B are related by a search key, the system memorizes and stores that fact and then connects the databases by the dotted line. In contrast, the databases E and C, for example, are not related, so that they are not connected by the dotted line. Numeral 303 designates an OK button for instructing the calculating unit 107 to start a search process. Numeral 304 designates a cursor that can be moved on the screen by operating the mouse unit 106.

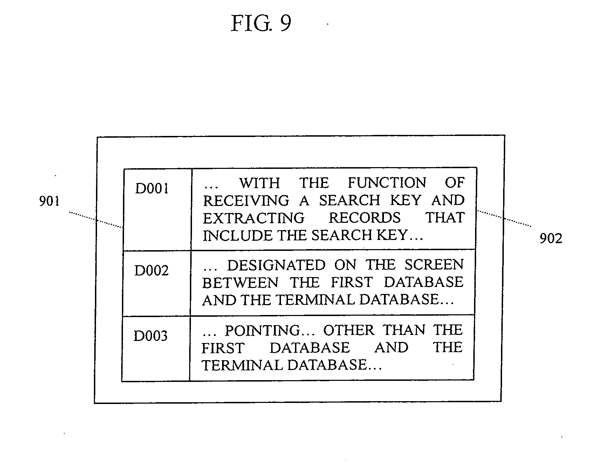

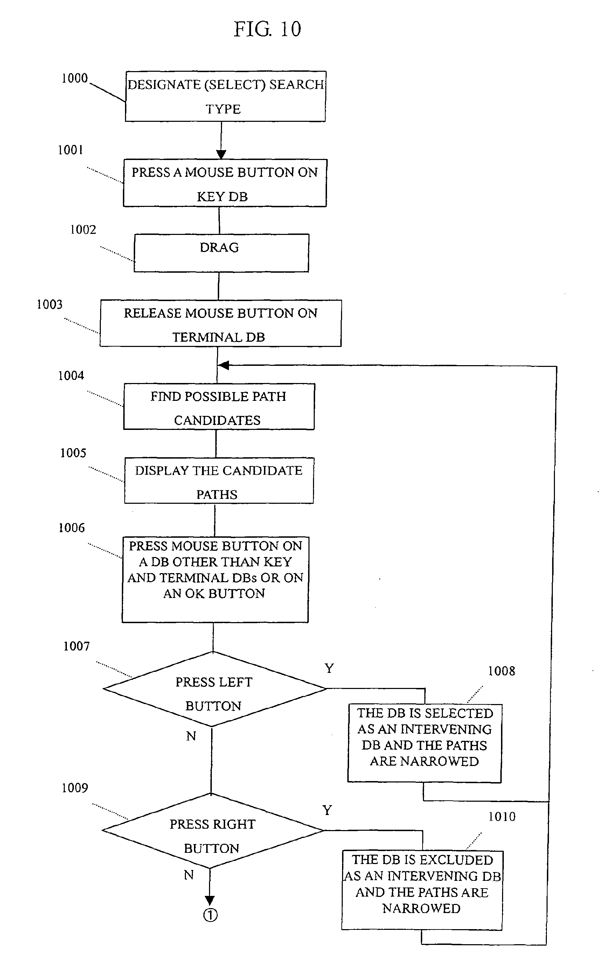

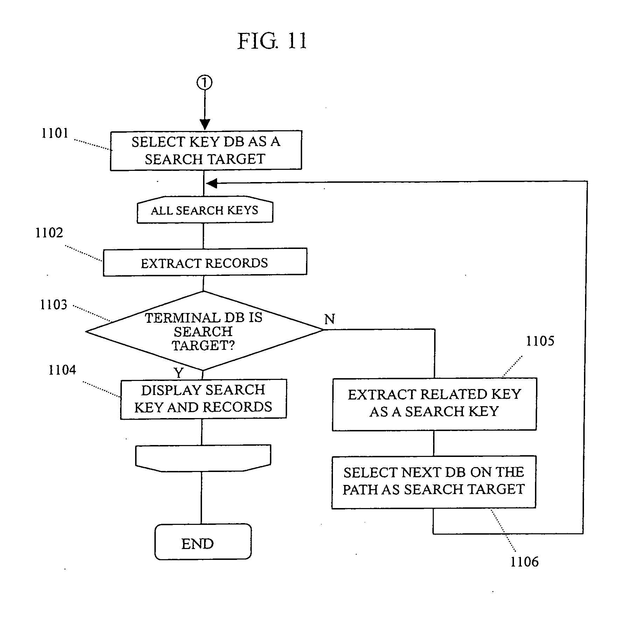

Fig. 9 shows an example of the screen displaying a group of records as a search result. A column 901 shows the search key for each record. A column 902 shows the content of each record. Fig. 10 shows a flowchart of the processes performed in the present embodiment. Fig. 11 shows the rest of the flowchart of Fig. 10. Hereafter, the method of designating a database search path according to the present embodiment will be described in detail by referring to this flowchart. Figs. 1 to 9 will also be referred to as necessary. It is herein assumed that the user has entered a search key into the key database. The search key may be an identification number (ID), a sequence (gene sequence, for example), or a particular keyword, for example.

At the beginning of the process, the user enters a search key and then designates the type of search (step 1000). The display unit 105 then displays the screen shown in Fig. 3. As shown in Fig. 3, the display screen shows seven databases A to G, for example. The line 302 connecting databases indicates that there is the possibility that the field 203 of the records of one of the connected databases stores search keys for records in the other database. Accordingly, by retrieving a record from one of the databases, at least one related key could possibly be retrieved from the field 203, which key can be entered into the other database so that some record can be retrieved therefrom. In other words, the line 302 indicates the possibility of retrieving records and search keys in a chain-reactive manner between key database A and terminal database D, for example, when a plurality of databases (such as A, B, C and D) are consecutively connected by the line 302.

In the state shown in Fig. 3, none of the databases is selected, and thus only database A that can be selected as a key database is indicated by a solid line. Other databases are indicated by a dotted line. Whether a database is selectable as a key database or not is determined by the system according to the type of the search key entered in step 1000. For example, in the case where a gene sequence is entered as a search key, the system refers to a pre-stored correspondence table (not shown), for example, showing the correspondence between the type of search key and the databases that are searchable by a particular type of search key. Then, only those databases that are searchable using the gene sequence as a key are displayed with solid line as key database candidates.

In step 1001, the user can move the mouse cursor 304 to database A indicated by solid line and select the database by depressing a mouse button (left click), for example. If there are a plurality of databases indicated by solid line, the user selects one as a key database.

As shown in Fig. 4, the figure of the key database, namely database A, is displayed in a manner such that it can be distinguished from other databases, such as with a color. At the same time, the terminal database candidates (databases D, F and G in the illustrated example) are indicted by solid line so that they can be distinguished from other databases. The terminal database candidates are selected by the system depending on which database is selected as a key database. Specifically, when a particular database is selected as the key database, the system refers to a correspondence table (not shown) of potential terminal databases to find the terminal database candidates, which are then displayed by solid line.

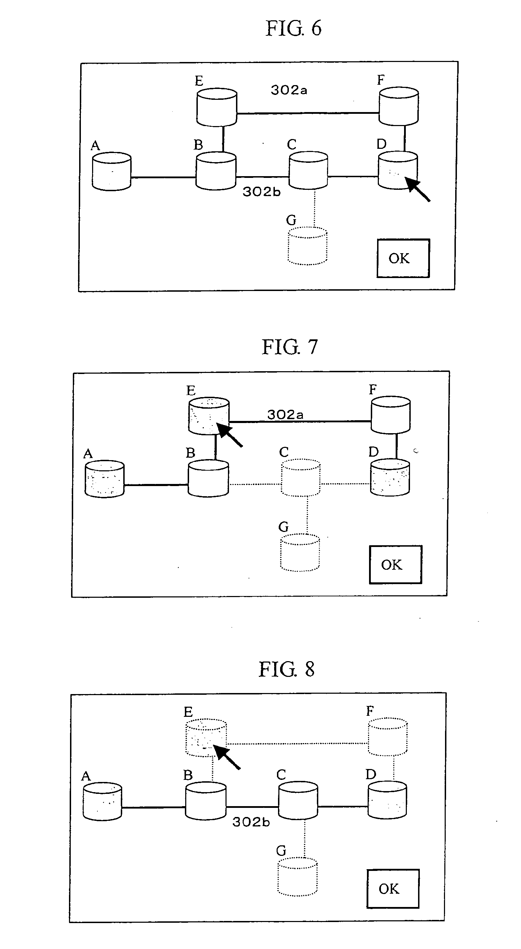

In step 1002, the user moves the mouse cursor 304 to the figure of the database which the user wishes to select as a terminal database, while keeping the mouse button depressed (dragging). Then, as shown in Fig. 5, the line connecting the key database A to the terminal database D is indicated by solid line. In step 1003, the mouse button is released on terminal database D, whereby the line connecting key database A and terminal database D disappears, as shown in Fig. 6. Thereafter, the figure of terminal database D is indicated with a color, for example, such that it can be distinguished from the other databases.

In step 1004, a process is carried out to determine all of the path candidates through which the selected key database A and terminal database D can be connected and which do not include the same databases more than once (such that each path can be drawn with a single continuous line). This process can be realized by using a simple method of maze search whereby all the (possible) paths (search path candidates) are followed one after another, starting from database A, along the line 302. Each path that eventually leads to terminal database D is then stored.

As a result, two paths 302a and 302b of A→ B→E→F→D and A→B→C→D can be found, as shown in Fig. 6. Then, in step 1005, the lines indicating these candidate paths are colored as shown in Fig. 6, and the databases on the paths are displayed by solid lines as selectable databases. In step 1006, one of the selectable databases (B, C, D, E, and F) indicated by solid line and other than key database A and terminal database D is selected as an intervening database by clicking the corresponding figure, using the mouse. For example, the figure of database E is clicked in step 1007 by a left click of the mouse.

The routine then proceeds to step 1008 where the candidate paths 302b and 302a shown in Fig. 6, namely A→B→C→D and A→B→E→F→D, are narrowed down to the path designated by the user that goes through the intervening database E, namely the path 302a or A→B→E→F→D. The routine then proceeds to step 1004. As a result, terminal database E is indicated with a color to show that the database is an intervening database, and the line 302a of A→B→E→F→D is indicated by solid line, as shown in Fig. 7.

If the figure of database E is selected by a right click of the mouse in step 1009, the routine continues at step 1010, where database E is treated as an eliminated database and the candidate paths shown in Fig. 6 is narrowed down to that which does not go through database E, namely the path 302b or A→B→C→D. The routine then continues at step 1004. As a result, terminal database E is indicated with a color to indicate it to be an eliminated database, and the line 302b of A→B→C→D is displayed with solid line, as shown in Fig. 8.

The number of the paths that are selected may be either one or more. By designating intervening databases or eliminated databases, many path candidates can be narrowed in number.

In step 1006, if the button 303 is depressed, the routine continues at step 1101 from which a search process is conducted on the key database as the search target. First, in step 1102, a record corresponding to one of the search keys is retrieved by referring to a table (shown in Fig. 2) in the search target database. Then, if the search target terminal database is not the terminal database in step 1103, the routine continues at step 1105 where a search key is retrieved from the field 203.

Then, in step 1106, the search target is switched to the next database in the path selected in Fig.7 or 8, and the routine returns to step 1102. If in step 1103 the search target database is the terminal database, the routine continues at step 1104 where the search keys entered into the terminal database and the corresponding records are displayed in regions 901 and 902, respectively (Fig. 9). If a plurality of records have been retrieved from the terminal database, all of them are displayed in the columns 901 and 902.

The process described with reference to Figs. 10 and 11 may be rendered into a program to be carried out by a computer, such program being encompassed by the scope of the invention.

By using the method of designating the database search paths according to the present embodiment, (1) the user can recognize possible candidate paths in a visually easily recognizable manner upon designation of the key database and terminal database; (2) when there are more than one possible candidate paths, they can be narrowed down to only those that go through desired databases by designating appropriate databases as intervening or eliminated databases, before record retrieval; and (3) the user can recognize in a visually easily understandable manner whether or not a certain database is selectable as key database or terminal database.

Thus, the invention can provide several advantages in a database system in which a record retrieval is carried out using a first search key that is entered into a key database. In the data system, a second key contained in the retrieved records is entered into a second database different from the key database to carry out a record retrieval in the second database. This is followed by the retrieval of search keys and records in a plurality of databases in a chain-reactive manner. Upon retrieval of records from a pre-designated terminal database, the system provides the retrieved records as search results. The aforementioned advantages include the following.
(1) The user can recognize possible candidate paths in a visually easily recognizable manner upon designation of the key database and terminal database.
(2) When there are more than one possible candidate paths, they can be narrowed down to only those that go through desired databases before record retrieval by designating appropriate databases as intervening or eliminated databases.
(3) the user can recognize in a visually easily understandable manner whether or not a certain database is selectable as key database or terminal database.

## Claims

1. A method of designating a database search path:
the method comprising:
a first step of displaying databases that can be search targets, in the form of figures on a screen;
a second step of designating individual figures and designating the databases corresponding to the designated figures as the first database and the terminal database; and
a third step of carrying out a chain-reactive retrieval of search keys and records by following two steps, one of said two steps comprising retrieving records by using a search key that is entered into a database and another of said two steps comprising entering a next search key contained in said retrieved records into next database through the search path candidates.

2. The method according to claim 1, wherein the third step includes the step of displaying the search path candidates in the form of figures by which the figures indicating the individual databases are connected.

3. The method according to claim 1 or 2, wherein the third step includes the step of narrowing the search path candidates down to only those that pass through all of the databases corresponding to designated figures other than the first database and terminal database.

4. The method according to claim 1 or 2, wherein the third step includes the step of narrowing the search path candidates to only those that do not pass through any of the databases corresponding to designated figures other than the first database and terminal database.

5. The method according to any of claims 1 to 4, further comprising either one or both of the following steps:
displaying, upon designation of the first database, only those figures corresponding to databases that can be designated as the first database, on the screen, preferably with a feature distinguishing them from other figures; and
displaying, upon designation of the terminal database, only those figures corresponding to databases that can be designated as the terminal database, on the screen, preferably with a feature distinguishing them from other figures.

6. A program for causing a computer to carry out a method of designating a database search path comprising steps of:
a first step of displaying databases that can be search targets, in the form of figures on a screen;
a second step of designating individual figures and designating the databases corresponding to the designated figures as the first database and the terminal database; and
a third step of carrying out a chain-reactive retrieval of search keys and records by following the two steps, one of said two steps comprising retrieving records by using a search key that is entered into a database and another of said two steps comprising entering a next search key contained in said retrieved records into next database through the search path candidates.

7. The program according to claim 6, wherein the third step includes the step of displaying the search path candidates in the form of figures by which the figures indicating the individual databases are connected.

8. The program according to claim 6 or 7, wherein the third step includes the step of narrowing the search path candidates down to only those that pass through all of the databases corresponding to designated figures other than the first database and terminal database.

9. The program according to claim 6 or 7, wherein the third step includes the step of narrowing the search path candidates to only those that do not pass through any of the databases corresponding to designated figures other than the first database and terminal database.

10. The program according to any of claims 6 to 9, further comprising either one or both of the following steps:
displaying, upon designation of the first database, only those figures corresponding to databases that can be designated as the first database, on the screen, preferably with a feature distinguishing them from other figures; and
displaying, upon designation of the terminal database, only those figures corresponding to databases that can be designated as the terminal database, on the screen, preferably with a feature distinguishing them form other figures.
